# EUROPEAN PATENT SPECIFICATION

(11) **EP 3 428 095 B1**
(45) Date of publication and mention of the grant of the patent: **15.09.2021**
(21) Application number: 17180609.4
(22) Date of filing: 10.07.2017
(51) Int. Cl.: B65H 5/02, B65H 29/16, B65H 29/24, B65H 29/34, B65H 5/22

(54) **TRANSPORTING SHEETS OF PRINT MEDIA**
TRANSPORT VON BLÄTTERN VON DRUCKMEDIEN
TRANSPORT DE FEUILLES DE SUPPORT D'IMPRESSION

(43) Date of publication of application: 16.01.2019
(73) Proprietor: HP Scitex Ltd, 42505 Netanya (IL)
(72) Inventor: DIM, Yuval, 42505 Netanya (IL); VEIS, Alex, 42505 Netanya (IL)
(74) Representative: EIP

(56) References cited:
- EP-A2- 1 847 397
- WO-A1-2016/083408
- DE-A1- 19 929 316
- US-A- 5 562 032
- US-A1- 2002 012 036
- US-A1- 2010 109 235
- US-A1- 2014 035 217
- US-B1- 8 857 813

## Description

### BACKGROUND

Digital printing presses deposit printing fluid onto print media. The print media may be supplied in the form of sheets, such as sheets of corrugated cardboard for packaging. Printing fluids for deposit may comprise inks, primers, fixing agents, glosses and varnishes, amongst others. Certain printing fluids may be deposited on top of other printing fluids, e.g. inks over fixing agents or varnishes over inks. Before printing fluids can be deposited on top of other printing fluids, they may need to dry and/or undergo particular chemical reactions or interactions. Similarly, sheets may not be stacked and/or otherwise handled until printing fluids are dry. This can conflict with the desire for high throughput from the printing press. For example, modern printing presses may operate at speeds of up to several meters per second.

US2002/012036 describes a printer and a transport assembly. The transport assembly has a blank drying arrangement located between a transport conveyor and a belt that conveys the dried blanks to a stack. Other related apparatuses and methods are disclosed in DE 199 29 316A1, US 2014/0035217 A1, and US 8,857,813 B1.

### BRIEF DESCRIPTION OF THE DRAWINGS

Various features of the present disclosure will be apparent from the detailed description which follows, taken in conjunction with the accompanying drawings, which together illustrate features of certain examples, and wherein:
Figure 1A is a schematic diagram showing a side view of a media transport apparatus at a first time according to an example;
Figure 1B is a schematic diagram showing a side view of the media transport apparatus of Fig. 1A at a second time;
Figure 1C is a schematic diagram showing a top view of an implementation of the media transport apparatus of Fig. 1A;
Figure 2 is a schematic diagram showing a side view of a printing press according to an example;
Figure 3A is a schematic diagram showing a side view of a media transport apparatus at a first time according to another example;
Figure 3B is a schematic diagram showing a top view of the media transport apparatus of Fig. 3A at the first time;
Figure 3C is a schematic diagram showing a side view of a variation of the media transport apparatus of Figure 3A at a second time; and
Figure 4 is a flow diagram showing a method of delaying transport of a sheet of print media according to an example.

### DETAILED DESCRIPTION

Certain examples described herein provide a way to transport media within a printing press. In examples, media transport sections are arranged to transport sheets of print media onto holding sections. In these holding sections a sheet of media may be held for a configurable time period before being deposited onto a further media transport section. By stacking rows of media transport sections and holding sections in a direction perpendicular to a plane of the sheet of print media, a time delay may be introduced into the media transport system of the printing press that allows printing fluids to dry. These examples thus enable throughput to be balanced against drying time without a large footprint. They also enable a significant reduction in the energy used to dry printing fluids.

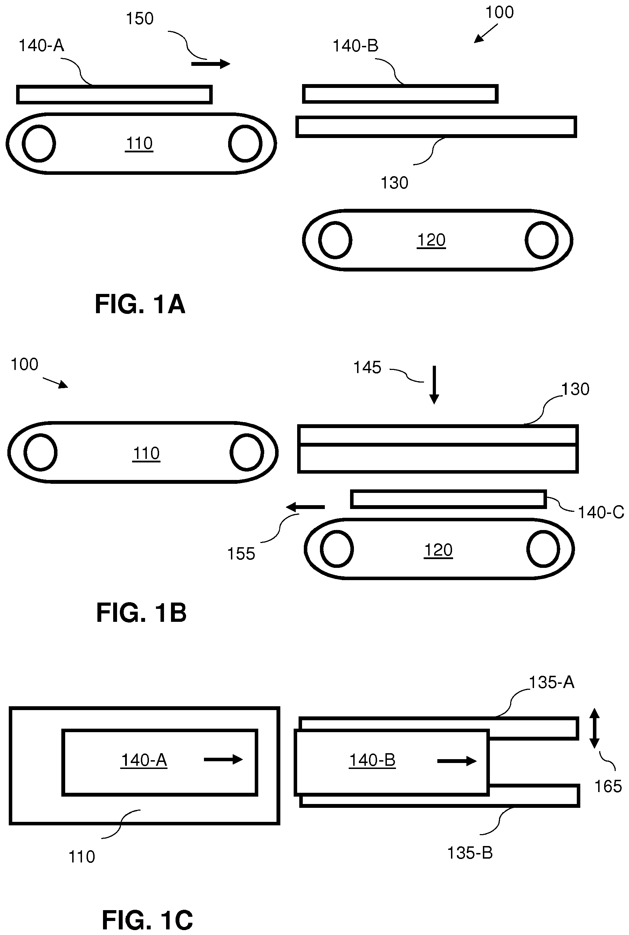

Figure 1A shows a media transport apparatus 100 comprising a plurality of media transport sections, in the form of a first media transport section 110 and a second media transport section 120, and a holding section 130. The media transport sections 110, 120 may be implemented by a variety of different media transport technologies, e.g. may comprise a belt conveyor system or set of rollers. The media transport sections 110, 120 are arranged to transport sheets of print media 140. The sheets of print media may comprise sheets of paper, polymer, corrugated media, card and/or fabric, amongst other materials. The media transport sections 110, 120 may comprise vacuum systems to retain sheets of print media upon an upper surface, such as a belt or conveyor. As shown in Figure 1, the second media transport section 120 is offset from the first media transport section 110 in a media transport direction 150. In Figure 1A, the media transport direction 150 is left to right, and thus the second media transport section 120 is horizontally-spaced to the right of the first media transport section 110. The media transport direction 150 is set by the first media transport section 110.

The holding section 130 is aligned with the first media transport section 110 so as to receive a sheet of print media 140-B from the first media transport section 110, e.g. as the sheet of print media 140-B moves in the media transport direction 150. In Figure 1A, the holding section 130 is horizontally aligned with the first media transport section 110. The holding section 130 is arranged above the second media transport section 120, i.e. is vertically aligned with the second media transport section 120.

Figure 1B shows how the holding section 130 is moveable to deposit a sheet of print media 140-C upon the second media transport section 120. In Figure 1B, the holding section 130 is actuated, which causes the sheet of print media 140-C to drop under gravity in direction 145 onto the second media transport section 120. In certain cases, the drop can be accelerated by air flow and/or air suction. The holding section 130 may be activated by pivoting or laterally moving supporting elements of the holding section 130. These supporting elements may thus move and no longer support the sheet of print media. In Figure 1B, the second media transport section 120 has a media transport direction 155 that is opposite to the media transport direction 150 imparted by the first media transport section 110. In other examples, the media transport direction 155 may be the same as the media transport direction 150.

Figure 1C shows a possible implementation of the media transport apparatus 100 of Figure 1A from above. In operation, the media transport apparatus 100 receives sheets of media 140 and the first media transport section 110 transports the sheets of media 140 onto the holding section 130. The holding section 130 in Figure 1C comprises two supporting elements 135-A and 135-B. These supporting elements 135-A and 135-B may comprise a set of laterally spaced bars or rods that extend in the media transport direction 150. At least one of the supporting elements 135 may be laterally moveable so as to accommodate different sizes of print media, such as different sheet widths, as in indicated by arrow 165. In Figure 1C, at least supporting element 135-A is moveable in a direction perpendicular to the media transport direction 150 in a plane parallel with the sheet of print media 140-B. For example, sheets of widths from 0.5m to 1.5m may be accommodated by adjusting the lateral spacing of the supporting elements 135. In other examples, the holding section may alternatively comprise at least one platform or shelf that is pivotable or laterally moveable so as to deposit a sheet of print media upon the second media transport section 120. For example, a linear drive system may move a support element from under the sheet of print media (e.g. upwards and downwards from the perspective of Figure 1C).

In Figure 1C, the sheet of print media 140-B is supported upon respective surfaces of the plurality of laterally-spaced supporting elements. These may be an upper surface of a bar or rod, or a planar member. One method of actuating the supporting elements 135 is to rotate at least one of said elements to deposit the sheet of print media upon the second media transport section 120. For example, if a support surface of the supporting elements is cantilevered from a pivotable axis, rotation of the surface about that axis may rotate the surface such that it lies beyond the edge of the sheet of print media, enabling the sheet to fall between the supporting elements onto the second media transport section 120. Rotation may be actuated using one or more motors. The speed and frequency of actuation may be programmed based on a known conveyance speed of the sheets of print media.

In certain examples, sheets of media may be accelerated prior to receipt upon media transport section 110 so as to introduce controllable spacing between sheets of print media. In other examples, there may be little or no spacing between the sheets, wherein the time taken to actuate the holding section 130 and reset to the position of Figure 1A is controlled such that the holding section 130 is able to receive and support the next sheet of print media (e.g. sheet 140-A in Figure 1A).

In certain examples, the media transport apparatus further comprises an air supply that directs an air flow onto the second media transport section 120. For example, an air flow may be directed diagonally downwards onto the upper surface on the second media transport section 120, e.g. below the righthand edge of the holding section 130 in Figure 1A. An air flow can assist the falling of the sheet of print media, e.g. providing a force to increase the speed at which the sheet falls onto the second media transport section 120. This may be beneficial to allow the holding section 130 to be actuated and reset before a next sheet of print media arrives.

The arrangement showed in Figure 1A compresses the length of the media transport in direction 150, e.g. the horizontal direction in Figure 1A, by offsetting and stacking media transport sections 110, 120 in a direction substantially perpendicular to the planes of the sheets of print media 140, e.g. the vertical direction in Figure 1A. Thus the horizontal footprint of the media transport apparatus 100 is reduced, while the holding section 130 delays the passage of a sheet of print media through the apparatus and thus provides increased drying time for printing fluids. These printing fluids may comprise inks, primers, fixing agents, glosses and varnishes, amongst others.

In a comparative example having a continuous media transport, e.g. a continuous horizontal conveyor unit, a printing press may run at speeds of between ∼1-3 ms⁻¹. If a particular printing fluids takes 15s to dry, at an operating speed of 2 ms⁻¹, this comparative example may have a conveyor 30m in length. However, certain examples described herein enable drying times of up to 15s with much reduce horizontal lengths, by effectively folding the media transport in the vertical dimension. At operating speeds of 2 ms⁻¹, a sheet of length 0.7m will be received by the first media transport section 110 every 0.35s. As such, the actuation of the holding section 130 is on the order of fractions of a second. The examples described herein further avoid contact with the upper surface of a sheet of print media, which may be wet and cannot be handled while drying.

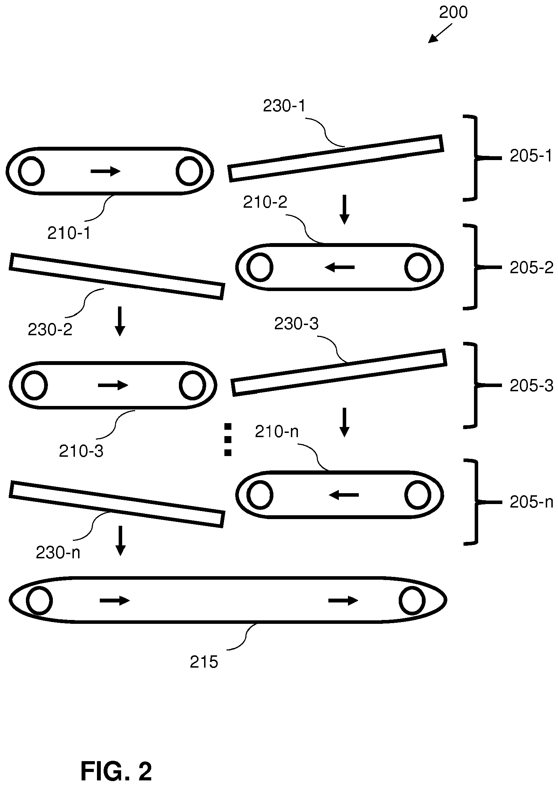

Figure 2 is a schematic diagram showing a side view of a printing press 200 according to an example. This printing press 200 is an extension of the media transport apparatus 100 shown in Figures 1A, B and C. The printing press 200 may be configured to handle sheets of corrugated media, such as cardboard for packaging. The printing press 200 comprises a plurality of media transport tiers 205. Each media transport tier comprises a conveyance unit 210 and a set of holding bars 230 aligned in a direction of media transport for the tier. For example, with reference to Figure 1A, a media transport tier may be implemented using the first media transport section 110 and the holding section 130. In Figure 2, the holding bars 230 are angled (slanting upwards from left to right). Holding bars 230 may be angled in the manner shown in the Figure, i.e. sloping upwards in the direction of travel of the tier, or in another manner, e.g. sloping downwards in the direction of travel of the tier, or may not be angled.

In Figure 2, there are *n* media transport tiers. In each tier, a direction of media transport is reversed, e.g. as compared to the tier above or below. A sheet of print media thus travels through the printing press as indicated by the arrows of the Figure. In other examples, this may not be the case, for example, an arrangement may be stepped from left to right or from right to left. In Figure 2, the plurality of media transport tiers 205 are spaced in a direction perpendicular to planes of media transport, i.e. in a vertical direction. Each set of holding bars 230 are arranged to receive a sheet of corrugated media from a respective conveyance unit and to hold the sheet for a period of time. The holding bars 230 of each tier, apart from the last tier 205-n, are moveable to deposit a received sheet of corrugated media onto a conveyance unit of a lower media transport tier. The holding bars 230 of the last tier 205-n are moveable to deposit a received sheet of corrugated media onto an unloading conveyance unit 215, which extends along the length of the tiers. Depending on the vertical space available, additional tiers may be added to further extend a drying period.

In certain printing presses, a dryer unit is used to dry printing fluid on a sheet of print media. In these cases, the arrangement of Figure 1A or Figure 2 may transport a sheet of print media to a dryer unit, e.g. from the second media transport section 120 or the unloading conveyance unit 215. By using the arrangements of Figure 1A or Figure 2 to introduce a delay into the transport of print media, an amount of energy used for drying printing fluid may be reduced considerable. For example, introducing a delay of 40s with the arrangement of Figure 2 may reduce the power used for drying the sheets of print media from 300KW to 50KW (i.e. by a factor of 6).

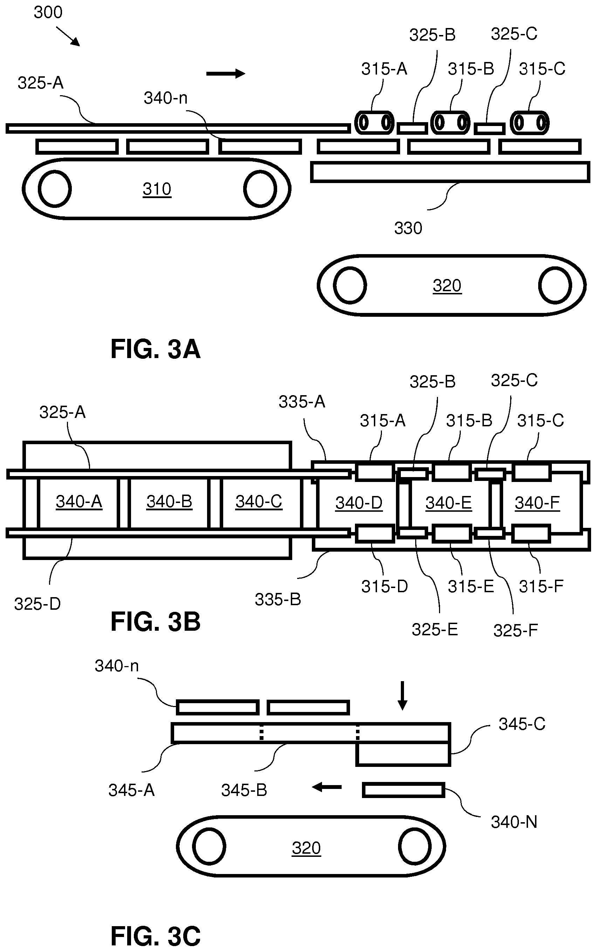

Figures 3A, B and C show a variation of the apparatus of Figures 1A-C or 2 that may be used to handle smaller sheets of print media. Figure 3A shows features that are variations on the features shown in Figure 1A, and Figure 3B shows features that are variations on the features shown in Figure 1C. Figure 3C shows a further variation of the features shown in Figure 1B.

Figure 3A shows a media transport apparatus 300 that again comprises a first media transport section 310, a second media transport section 320 and a holding section 330. In this case, however, the media transport apparatus 300 receives a number of small sheets of print media. In this case, 'small' is taken to mean that the sheets have a width and/or height that is a proportion of the length of the media transport sections 110, 120 and the holding section 130. For example, in Figures 3A-C, the sheets of print media 340-n are about a third of the length of the media transport sections 110, 120 and the holding section 130. In certain implementations, 'small' sheets may have widths of between 0.5-0.7m.

In certain printing presses, each sheet may have a margin that does not contain printing fluid. For example, each sheet may have a 1 cm margin on each side. In Figure 3A, there are a plurality of guide elements 325 located above first media transport section 310 and the holding section 330, wherein the sheets of print media 340 are guided between the plurality of guide elements 325 and each of the first media transport section 310 and the holding section 330. The plurality of guide elements 325 may be laterally adjustable such that they apply a downwards reactive force within the unprinted margins of each sheet. For example, in Figure 3B there are two sets of laterally spaced guide members 325A-C and 325D-F that are respectively and approximately aligned with the laterally spaced supporting elements 335 A and B. These guide members may comprise metallic strips or rods.

Above the holding section 330, there are a number of gaps in the guide member for each side. Within these gaps are a series of media transport elements 315 that are arranged to move the sheets of print media along the holding section 330. These media transport elements 315 may comprise driven belts or rollers. They may be of a same type or a different type as the media transport sections 310 and 320. In Figure 3A, it may be seen how these media transport elements 315 apply a force to the upper edges of a sheet of print media, in order to accommodate multiple sheets upon the holding section 330. The holding section 330 may comprise a low friction material or surface to allow the lower edge of the print media to slide along the holding section 330. In other examples, the holding section 330 may comprise the media transport elements 315 to move the sheets from below. The media transport elements 315 may be laterally adjustable together with the guide members, e.g. they may be moved as a single unit in certain implementations.

In the example of Figures 3A and 3B it can be seen how the holding section 330 may now accommodate three small sheets of print media instead of one. In one example, all three sheets may be released together when the holding section 330 is actuated. This structure enables the loading of a number of smaller size sheets above the supporting elements 335 of the holding section 330 and by that reduce the frequency of dropping the sheets of media and increase the media time delay.

Figure 3C shows a further variation of the media transport apparatus 300 of Figures 3A and 3B. In this case, the holding section 330 is split into a number of portions 345 A-C that each may be selectively actuated to deposit a separate sheet of print media onto the media transport section 320. In Figure 3C the holding section 330 is split into three portions; however, any number of portions may be arranged, depending on the sheets of print media that can be handled by the media transport apparatus. In Figure 3C, each of the three sheets of print media may be deposited in turn, or the end portion may be actuated without the others and the remaining sheets driven along the holding section 330 by the media transport elements 315.

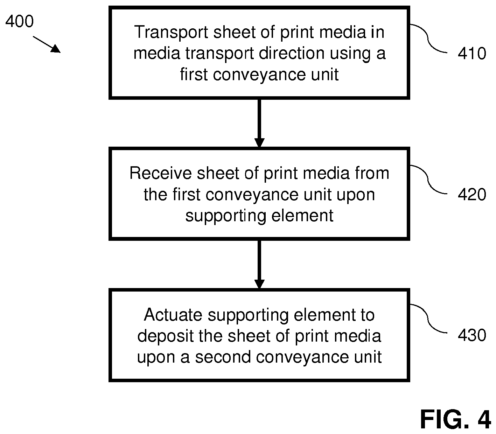

Figure 4 shows an example method 400 of delaying transport of a sheet of print media, e.g. within a printing press or system. At block 410, the sheet of print media is transported in a media transport direction using a first conveyance unit, e.g. such as media transport sections 110, 210 or 310. This may be by way of a driven belt or roller system. At block 420, the sheet of print media from the first conveyance unit is received upon at least one supporting element, e.g. that may implement a holding section 130, 230 or 330. At block 430, the at least one supporting element is actuated so as to deposit the sheet of print media upon a second conveyance unit, e.g. such as media transport sections 120, 220 or 320. In this case, the time the sheet of print media is held on the supporting element, and drops onto the second conveyance unit, acts to introduce a time delay into the transport of print media that enables drying of printing fluid deposited upon the media.

In one example, the method is repeated a plurality of times before actuating at least one supporting element so as to deposit the sheet of print media upon an unloading conveyance unit. For example, this may be the case with the printing press 200 of Figure 2.

In one example, receiving the sheet of print media from the first conveyance unit upon at least one supporting element comprises guiding the sheet of print media between a set of guide members and respective surfaces of the first conveyance unit and the at least one supporting element; and driving at least one media transport element aligned with the guide members above the at least one supporting element to move the sheet of print media along the at least one supporting element. For example, this is illustrated in Figure 3A. In this case, a plurality of sheets of print media may be received from the first conveyance unit upon the at least one supporting element and portions of the at least one supporting element may be actuated to deposit one of the plurality of sheets of print media onto the second conveyance unit, wherein other ones of the plurality of sheets of print media are retained upon the at least one supporting element.

## Claims

1. A media transport apparatus (100) comprising:
a plurality of media transport sections, including:
a first media transport section (110); and
a second media transport section (120) offset from the first media transport section (110) in a media transport direction (150);
and
a holding section (130) arranged to receive a sheet of print media (140) from the first media transport section (110),
**characterized in that** the holding section (130) is horizontally aligned with the first media transport section (110) in the media transport direction (150), and is arranged above and is vertically aligned with the second media transport section (120),
wherein the holding section (130) is moveable to deposit the sheet of print media (140) upon the second media transport section (120) and, when actuated, causes the sheet of print media (140) to drop under gravity onto the second media transport section (120), and
the second media transport section (120) is offset from the first media transport section (110) in a vertical direction.

2. The media transport apparatus (100) of claim 1, wherein the holding section (130) comprises:
a plurality of laterally-spaced supporting elements (135) that extend in the media transport direction (150),
wherein the sheet of print media (140) is supported upon respective surfaces of the plurality of laterally-spaced supporting elements (135), and
wherein each supporting element (135) is configured to rotate to deposit the sheet of print media (140) upon the second media transport section (120).

3. The media transport apparatus (100) of claim 2, wherein at least one of the plurality of laterally-spaced supporting elements (135) is moveable in a direction perpendicular to the media transport direction (150) in a plane parallel with the sheet of print media (140) to accommodate different sizes of print media (140).

4. The media transport apparatus (100) of claim 2, wherein each supporting element (135) comprises a plurality of individually moveable portions.

5. The media transport apparatus (100) of claim 1, comprising:
a plurality of media transport tiers (205), each media transport tier (205) comprising a media transport section and a holding section in horizontal alignment, the plurality of media transport tiers (205) being vertically stacked, wherein a direction of media transport is reversed for each media transport tier (205).

6. The media transport apparatus (100) of claim 5, comprising:
an unloading media transport section arranged below the last holding section in the plurality of media transport tiers.

7. The media transport apparatus (100) of claim 5 within a printing press for sheets of corrugated media, wherein:
each holding section comprises a set of holding bars (230) aligned in a direction of media transport for the tier (205), each set of holding bars (230) being arranged to receive a sheet of corrugated media from a respective media transport section and to hold the sheet for a period of time, and
at least one set of holding bars (230) being moveable to deposit a received sheet of corrugated media onto a media transport section of a lower media transport tier (205).

8. The media transport apparatus (100) of claim 1, comprising:
an air supply that directs an air flow onto the second media transport section (120).

9. The media transport apparatus (100) of claim 1, comprising:
a plurality of guide elements (325) located above first media transport section (110) and the holding section (130),
wherein the sheet of print media (140) is guided between the plurality of guide elements (325) and each of the first media transport section (110) and the holding section (130).

10. The media transport apparatus (100) of claim 1, comprising:
at least one media transport element (315) arranged above the holding section (130) to move the sheet of print media (140) along the holding section (130).

11. A method of delaying transport of a sheet of print media (140), comprising:
transporting the sheet of print media (140) in a media transport direction (150) using a first conveyance unit;
the method being **characterized by**
receiving the sheet of print media (140) from the first conveyance unit upon at least one supporting element (135) of a holding section (130) horizontally aligned with the first conveyance unit and arranged above and vertically aligned with a second conveyance unit, the second conveyance unit offset from the first conveyance unit in a vertical direction; and
actuating the at least one supporting element (135) so as to drop the sheet of print media (140) under gravity upon the second conveyance unit.

12. The method of claim 11, wherein the method is repeated a plurality of times before actuating at least one supporting element (135) so as to deposit the sheet of print media (140) upon an unloading conveyance unit.

13. The method of claim 11, wherein receiving the sheet of print media (140) from the first conveyance unit upon at least one supporting element (135) comprises:
guiding the sheet of print media (140) between a set of guide members (325) and respective surfaces of the first conveyance unit and the at least one supporting element (135); and
driving at least one media transport element (315) aligned with the guide members (325) above the at least one supporting element (135) to move the sheet of print media (140) along the at least one supporting element (135).

14. The method of claim 13, comprising:
receiving a plurality of sheets of print media (140) from the first conveyance unit upon the at least one supporting element (135); and
selectively actuating portions of the at least one supporting element (135) to deposit one of the plurality of sheets of print media (140) onto the second conveyance unit,
wherein other ones of the plurality of sheets of print media (140) are retained upon the at least one supporting element (135).

## Patentansprüche

1. Medientransportvorrichtung (100), die Folgendes umfasst:
mehrere Medientransportbereiche, die Folgendes einschließen:
einen ersten Medientransportbereich (110); und
einen zweiten Medientransportbereich (120), der von dem ersten Medientransportbereich (110) in einer Medientransportrichtung (150) versetzt ist; und
einen Haltebereich (130), der dazu angeordnet ist, einen Bogen von Druckmedien (140) von dem ersten Medientransportbereich (110) aufzunehmen,
**dadurch gekennzeichnet, dass**
der Haltebereich (130) horizontal mit dem ersten Medientransportbereich (110) in Medientransportrichtung (150) ausgerichtet ist und oberhalb des zweiten Medientransportbereichs (120) angeordnet und vertikal mit diesem ausgerichtet ist,
wobei der Haltebereich (130) beweglich ist, um den Bogen von Druckmedien (140) auf dem zweiten Medientransportbereich (120) abzulegen, und wenn er betätigt wird, bewirkt, dass der Bogen von Druckmedien (140) unter Schwerkraft auf den zweiten Medientransportbereich (120) fällt, und
der zweite Medientransportbereich (120) von dem ersten Medientransportbereich (110) in einer vertikalen Richtung versetzt ist.

2. Medientransportvorrichtung (100) nach Anspruch 1, wobei der Haltebereich (130) Folgendes umfasst:
mehrere seitlich beabstandete Tragelemente (135), die sich in Medientransportrichtung (150) erstrecken,
wobei der Bogen von Druckmedien (140) auf jeweiligen Oberflächen der mehreren seitlich beabstandeten Tragelemente (135) getragen wird, und
wobei jedes Tragelement (135) dazu konfiguriert ist, sich zu drehen, um den Bogen von Druckmedien (140) auf dem zweiten Medientransportbereich (120) abzulegen.

3. Medientransportvorrichtung (100) nach Anspruch 2, wobei wenigstens eines der mehreren seitlich beabstandeten Tragelemente (135) in einer Richtung senkrecht zu der Medientransportrichtung (150) in einer Ebene parallel zu dem Bogen von Druckmedien (140) beweglich ist, um verschiedene Größen von Druckmedien (140) aufzunehmen.

4. Medientransportvorrichtung (100) nach Anspruch 2, wobei jedes Tragelement (135) mehrere einzeln bewegliche Abschnitte umfasst.

5. Medientransportvorrichtung (100) nach Anspruch 1, die Folgendes umfasst:
mehrere Medientransportebenen (205), wobei jede Medientransportebene (205) einen Medientransportbereich und einen Haltebereich in horizontaler Ausrichtung umfasst, wobei die mehreren Medientransportebenen (205) vertikal gestapelt sind, wobei eine Richtung des Medientransports für jede Medientransportebene (205) umgekehrt ist.

6. Medientransportvorrichtung (100) nach Anspruch 5, die Folgendes umfasst:
einen Entlademedientransportbereich, der unterhalb des letzten Haltebereichs in den mehreren Medientransportebenen angeordnet ist.

7. Medientransportvorrichtung (100) nach Anspruch 5 innerhalb einer Druckmaschine für Bögen aus gewellten Medien, wobei:
jeder Haltebereich einen Satz von Haltestangen (230) umfasst, die in einer Richtung des Medientransports für die Ebene (205) ausgerichtet sind, wobei jeder Satz von Haltestangen (230) dazu angeordnet ist, einen Bogen gewellter Medien von einem jeweiligen Medientransportbereich aufzunehmen, und den Bogen für eine Zeitspanne zu halten, und
wenigstens ein Satz von Haltestangen (230) beweglich ist, um einen aufgenommenen Bogen gewellter Medien auf einen Medientransportbereich einer unteren Medientransportebene (205) abzulegen.

8. Medientransportvorrichtung (100) nach Anspruch 1, die Folgendes umfasst:
eine Luftzufuhr, die eine Luftströmung auf den zweiten Medientransportbereich (120) richtet.

9. Medientransportvorrichtung (100) nach Anspruch 1, die Folgendes umfasst:
mehrere Führungselemente (325), die sich oberhalb des ersten Medientransportbereichs (110) und des Haltebereichs (130) befinden,
wobei der Bogen von Druckmedien (140) zwischen den mehreren Führungselementen (325) und jedem von dem ersten Medientransportbereich (110) und dem Haltebereich (130) geführt wird.

10. Medientransportvorrichtung (100) nach Anspruch 1, die Folgendes umfasst:
wenigstens ein Medientransportelement (315), das oberhalb des Haltebereichs (130) angeordnet ist, um den Bogen von Druckmedien (140) entlang des Haltebereichs (130) zu bewegen.

11. Verfahren zum Verzögern des Transports eines Bogens von Druckmedien (140), das Folgendes umfasst:
Transportieren des Bogens von Druckmedien (140) in einer Medientransportrichtung (150) unter Verwendung einer ersten Fördereinheit;
wobei das Verfahren durch Folgendes gekennzeichnet ist:
Aufnehmen des Bogens von Druckmedien (140) von der ersten Fördereinheit auf wenigstens ein Tragelement (135) eines Haltebereichs (130), der horizontal mit der ersten Fördereinheit ausgerichtet ist und oberhalb und vertikal ausgerichtet mit einer zweiten Fördereinheit angeordnet ist, wobei die zweite Fördereinheit von der ersten Fördereinheit in einer vertikalen Richtung versetzt ist; und
Betätigen des wenigstens einen Tragelements (135), um den Bogen von Druckmedien (140) unter Schwerkraft auf die zweite Fördereinheit fallen zu lassen.

12. Verfahren nach Anspruch 11, wobei das Verfahren mehrere Male wiederholt wird, bevor wenigstens ein Tragelement (135) betätigt wird, um den Bogen von Druckmedien (140) auf einer Entladefördereinheit abzulegen.

13. Verfahren nach Anspruch 11, wobei das Aufnehmen des Bogens von Druckmedien (140) von der ersten Fördereinheit auf wenigstens ein Tragelement (135) Folgendes umfasst:
Führen des Bogens von Druckmedien (140) zwischen einem Satz von Führungselementen (325) und jeweiligen Oberflächen der ersten Fördereinheit und des wenigstens einen Tragelements (135); und
Antreiben wenigstens eines Medientransportelements (315), das mit den Führungselementen (325) oberhalb des wenigstens einen Tragelements (135) ausgerichtet ist, um den Bogen von Druckmedien (140) entlang des wenigstens einen Tragelements (135) zu bewegen.

14. Verfahren nach Anspruch 13, das Folgendes umfasst:
Aufnehmen mehrerer Bögen von Druckmedien (140) von der ersten Fördereinheit auf dem wenigstens einen Tragelement (135); und
selektives Betätigen von Abschnitten des wenigstens einen Tragelements (135), um einen der mehreren Bögen von Druckmedien (140) auf der zweiten Fördereinheit abzulegen,
wobei andere der mehreren Bögen von Druckmedien (140) auf dem wenigstens einen Tragelement (135) gehalten werden.

## Revendications

1. Appareil de transport de supports (100) comprenant :
une pluralité de sections de transport de supports, comprenant :
une première section de transport de supports (110) ; et
une seconde section de transport de supports (120) décalée de la première section de transport de supports (110) dans une direction de transport de supports (150) ; et
une section de maintien (130) agencée pour recevoir une feuille de support d'impression (140) de la première section de transport de supports (110),
**caractérisée en ce que**
la section de maintien (130) est alignée horizontalement avec la première section de transport de supports (110) dans la direction de transport de supports (150), et est disposée au-dessus et est alignée verticalement avec la seconde section de transport de supports (120),
la section de maintien (130) étant mobile pour déposer la feuille de support d'impression (140) sur la seconde section de transport de supports (120) et, lorsqu'elle est actionnée, amenant la feuille de support d'impression (140) à tomber par gravité sur la seconde section de transport de supports (120), et
la seconde section de transport de supports (120) est décalée de la première section de transport de supports (110) dans une direction verticale.

2. Appareil de transport de supports (100) selon la revendication 1, la section de maintien (130) comprenant :
une pluralité d'éléments de support espacés latéralement (135) qui s'étendent dans la direction de transport de supports (150),
la feuille de support d'impression (140) étant supportée sur des surfaces respectives de la pluralité d'éléments de support espacés latéralement (135), et
chaque élément de support (135) étant configuré pour tourner afin de déposer la feuille de support d'impression (140) sur la seconde section de transport de supports (120).

3. Appareil de transport de supports (100) selon la revendication 2, au moins l'un de la pluralité d'éléments de support espacés latéralement (135) étant mobile dans une direction perpendiculaire à la direction de transport de supports (150) dans un plan parallèle à la feuille de support d'impression (140) pour s'adapter à différentes tailles de support d'impression (140).

4. Appareil de transport de supports (100) selon la revendication 2, chaque élément de support (135) comprenant une pluralité de parties mobiles individuellement.

5. Appareil de transport de supports (100) selon la revendication 1, comprenant :
une pluralité de niveaux de transport de supports (205), chaque niveau de transport de support (205) comprenant une section de transport de supports et une section de maintien en alignement horizontal, la pluralité de niveaux de transport de supports (205) étant empilés verticalement, une direction de transport de supports étant inversée pour chaque niveau de transport de supports (205).

6. Appareil de transport de supports (100) selon la revendication 5, comprenant :
une section de transport de supports de déchargement disposée en dessous de la dernière section de maintien dans la pluralité de niveaux de transport de supports.

7. Appareil de transport de supports (100) selon la revendication 5 à l'intérieur d'une presse à imprimer pour feuilles de support ondulé :
chaque section de maintien comprenant un ensemble de barres de maintien (230) alignées dans une direction de transport de supports pour le niveau (205), chaque ensemble de barres de maintien (230) étant agencé pour recevoir une feuille de support ondulé d'une section de transport de supports respective et tenir la feuille pendant un certain temps, et
au moins un ensemble de barres de maintien (230) pouvant être déplacé pour déposer une feuille reçue de support ondulé sur une section de transport de supports d'un étage inférieur de transport de supports (205).

8. Appareil de transport de supports (100) selon la revendication 1, comprenant :
une alimentation en air qui dirige un flux d'air sur la seconde section de transport de supports (120).

9. Appareil de transport de supports (100) selon la revendication 1, comprenant :
une pluralité d'éléments de guidage (325) situés au-dessus de la première section de transport de supports (110) et de la section de maintien (130),
la feuille de support d'impression (140) étant guidée entre la pluralité d'éléments de guidage (325) et chacune de la première section de transport de supports (110) et de la section de maintien (130).

10. Appareil de transport de supports (100) selon la revendication 1, comprenant :
au moins un élément de transport de supports (315) disposé au dessus de la section de maintien (130) pour déplacer la feuille de support d'impression (140) le long de la section de maintien (130).

11. Procédé pour retarder le transport d'une feuille de support d'impression (140), comprenant :
le transport de la feuille de support d'impression (140) dans une direction de transport de supports (150) en utilisant une première unité de moyen de transport ;
le procédé étant **caractérisé par**
la réception de la feuille de support d'impression (140) de la première unité de moyen de transport sur au moins un élément de support (135) d'une section de maintien (130) alignée horizontalement avec la première unité de moyen de transport et disposée au-dessus et alignée verticalement avec une seconde unité de moyen de transport, la seconde unité de moyen de transport décalée de la première unité de moyen de transport dans une direction verticale ; et
l'actionnement de l'au moins un élément de support (135) de manière à faire tomber la feuille de support d'impression (140) par gravité sur la seconde unité de moyen de transport.

12. Procédé selon la revendication 11, le procédé étant répété plusieurs fois avant d'actionner au moins un élément de support (135) de manière à déposer la feuille de support d'impression (140) sur une unité de moyen de transport de déchargement.

13. Procédé selon la revendication 11, la réception de la feuille de support d'impression (140) de la première unité de moyen de transport sur au moins un élément de support (135) comprenant :
le guidage de la feuille de support d'impression (140) entre un ensemble d'éléments de guidage (325) et les surfaces respectives de la première unité de moyen de transport et l'au moins un élément de support (135) ; et
l'entraînement d'au moins un élément de transport de supports (315) aligné avec les éléments de guidage (325) au-dessus de l'au moins un élément de support (135) pour déplacer la feuille de support d'impression (140) le long de l'au moins un élément de support (135).

14. Procédé selon la revendication 13, comprenant :
la réception d'une pluralité de feuilles de support d'impression (140) de la première unité de moyen de transport sur l'au moins un élément de support (135) ; et
l'actionnement sélectif de parties de l'au moins un élément de support (135) pour déposer l'une de la pluralité de feuilles de support d'impression (140) sur la seconde unité de moyen de transport,
d'autres feuilles de la pluralité de feuilles de support d'impression (140) étant retenues sur l'au moins un élément de support (135).
